(19) **Europäisches Patentamt**

**European Patent Office**

**Office européen des brevets**

(11) **EP 0 723 135 B1**

(12) **FASCICULE DE BREVET EUROPEEN**

(45) Date de publication et mention
de la délivrance du brevet:
**11.04.2001 Bulletin 2001/15**

(51) Int Cl.⁷: **G01B 7/06**

(21) Numéro de dépôt: **96400072.3**

(22) Date de dépôt: **12.01.1996**

(54) **Dispositif de mesure numérique de l'épaisseur de feuilles**

Vorrichtung zur numerischen Messung der Dicke von Blättern

Device for numerical thickness measurement of sheets

(84) Etats contractants désignés:
**DE FR GB IT SE**

(30) Priorité: **20.01.1995 FR 9500628**

(43) Date de publication de la demande:
**24.07.1996 Bulletin 1996/30**

(73) Titulaire: **PERTO S.A.**
**94060-520 Gravatai RS (BR)**

(72) Inventeur: **Elbling, Joseph**
**90000 Porto Alegre, RS (BR)**

(74) Mandataire: **Laget, Jean-Loup**
**Cabinet Loyer,**
**78, avenue Raymond Poincaré**
**75116 Paris (FR)**

(56) Documents cités:
**EP-A- 0 170 341**          **WO-A-82/01698**
**DE-A- 2 916 096**          **GB-A- 1 497 181**
**GB-A- 2 218 524**

- **PATENT ABSTRACTS OF JAPAN vol. 5 no. 185
(P-91) [857] ,25 Novembre 1981 & JP-A-56 112602
(NIPPON DENSOKUKI KENKYUSHO K.K.) 5
Septembre 1981,**
- **THE SOVIET JOURNAL OF NONDESTRUCTIVE
TESTING, vol. 23, no. 7, Juillet 1987 N.Y. USA,
pages 467-471, I.I. MAL'KO ET AL. 'Eddy-current
digital thickness meter tétsa'**
- **PATENT ABSTRACTS OF JAPAN vol. 12 no. 220
(P-720) ,23 Juin 1988 & JP-A-63 016215 (NEC
CORP.) 23 Janvier 1988,**
- **PATENT ABSTRACTS OF JAPAN vol. 12 no. 499
(P-807) ,27 Décembre 1988 & JP-A-63 208710
(OMRON TATEISI ELECTRONICS CO.) 30 Août
1988,**

**Description**

L'invention concerne un dispositif de mesure numérique de l'épaisseur de feuilles, particulièrement adapté au cas des distributeurs d'objets se présentant sous forme de feuilles, tels que des documents ou des billets de banque. Le dispositif selon l'invention est particulièrement adapté au cas des appareils susceptibles de délivrer des feuilles d'épaisseurs différentes et de distinguer l'épaisseur d'une feuille simple de celle d'un empilement de deux ou plusieurs feuilles, comme les appareils distributeurs automatiques de billets, par exemple.

Pour détecter le passage simultané de deux billets, il est connu par le brevet GB-A-1 344 986 de prévoir un détecteur optique sensible à l'opacité du billet ou des billets, mais il se révèle peu fiable dans le cas de billets graisseux ou salis.

Il est également connu de prévoir un détecteur mécanique d'épaisseur, utilisant un rouleau dont l'axe est déplacé lors du passage d'un billet : en cas de passage de plusieurs billets superposés, le déplacement de l'axe du rouleau commande un contact électrique.

Le brevet GB-A-1 497 181 décrit un appareil pour contrôler des matériaux en feuille, utilisant un rouleau palpeur et un transducteur à réluctance variable. Dans les appareils de ce type, l'épaisseur d'une feuille est définie par une valeur de seuil prédéterminée, et lorsque cette valeur est dépassée, l'appareil signale le passage de feuilles superposées. Un inconvénient de ces appareils est la variation à long terme dans la tête de détection ou dans les circuits de contrôle, qui fait varier la valeur de seuil.

Cette variation à long terme peut être provoquée par le mouvement mécanique entre le pivot d'un bras attaché à l'axe du rouleau et la surface sur laquelle est placée la feuille. Si la sortie du détecteur est comparée à un seuil fixe dans les étages de sortie du circuit de contrôle, la mesure de l'épaisseur de la feuille s'en trouve dégradée. La stabilité mécanique exigée pour mesurer l'épaisseur d'un billet, par exemple 50 à 150 micromètres, est difficile à assurer dans des conditions raisonnables de fabrication et d'usure.

Le brevet EP-A-0 064 523 décrit la détection de billets superposés, par l'utilisation de valeurs analogiques de seuil pour un billet unique et pour deux billets. Un circuit analogique permet de faire varier la valeur de référence en l'absence de billet, sans faire varier les différences entre le niveau en l'absence de billet et les niveaux de seuil pour un et deux billets.

Cependant, ce brevet ne décrit aucun moyen de compensation automatique des variations du gain dans le transducteur.

Ces variations du gain surviennent à la suite des variations d'amplitude dans l'oscillateur ou dans le circuit d'amplification du transducteur. Ces variations modifient le signal du transducteur, alors qu'elles ne modifient pas les valeurs de référence utilisées pour déclencher les seuils à un billet et à deux billets. Ces variations du gain font apparaître les billets plus minces ou plus épais, et, en conséquence, atteignent les valeurs de seuil avec des billets, ou des épaisseurs, autres que celles souhaitées.

Le brevet précité met en oeuvre un ajustement manuel d'un potentiomètre pour la détermination des valeurs de référence. Cet ajustement exige un personnel entraîné, ce qui rend l'installation et la maintenance plus difficiles, particulièrement lorsque des feuilles de différentes épaisseurs sont utilisées. Par exemple, dans les caisses automatiques qui délivrent des billets de différents pays (et de différentes épaisseurs) pendant la même période, ou sur les machines qui délivrent des objets autres que des billets, avec une épaisseur variable, par exemple des enveloppes timbrées, des billets de banque et des billets de loterie.

Le document JP 56-116 602 décrit la mesure d'épaisseur d'une feuille de métal non-magnétique, sans contact mécanique, au moyen d'un appareil à induction à deux enroulements.

La tension induite est mesurée en l'absence de feuille, puis en présence d'une feuille de référence, puis en présence de la feuille à mesurer. La tension mesurée est convertie par un convertisseur analogique-numérique et appliquée à un microprocesseur qui calcule l'épaisseur de la feuille et affiche le résultat du calcul.

Puisqu'il est nécessaire de procéder à une mesure de tension en présence d'une feuille de référence, il est indispensable de programmer le calculateur en lui fournissant comme donnée d'entrée l'épaisseur de la feuille de référence.

Cet appareil ne pouvant mesurer l'épaisseur que d'une feuille métallique, il ne peut être adapté à la mesure d'une feuille de papier ou d'un billet de banque.

Le document JP 63-016 215 décrit un circuit électronique à microprocesseur pour compenser, au moyen d'un programme, la dérive mécanique du matériel.

Pour les besoins du calcul, la tension analogique de mesure de l'épaisseur d'une feuille de papier est convertie par un convertisseur analogique-numérique.

Dans ce document, sont prévus un niveau standard en l'absence de papier et un niveau standard en présence de papier. Les mesures réellement effectuées sont comparées aux niveaux standard et corrigées pour les amener à coïncider avec les niveaux standard correspondants.

Ce document permet un ré-étalonnage de la mesure d'épaisseur sans réglage du matériel.

La présente invention a pour but de s'affranchir de ces inconvénients en n'utilisant pas de techniques analogiques pour mesurer l'épaisseur des billets.

L'invention a pour objet un dispositif de mesure numérique de l'épaisseur de feuilles qui passent entre un rouleau fixe et un rouleau palpeur sollicité vers le rouleau fixe, comportant un transducteur présentant au moins un enroulement d'entrée, au moins un enroulement de sortie, et un élément sensible à la position du rouleau palpeur, l'alimentation d'entrée du transducteur étant assurée par un oscillateur, caractérisé en ce que le transducteur comporte un troisième enroulement, de façon à utiliser, pour le calcul de l'épaisseur de la feuille, soit le rapport de deux tensions de sortie lorsque le troisième enroulement est un enroulement de sortie, soit le rapport de deux courants d'entrée lorsque le troisième enroulement est un enroulement d'entrée, et en ce que, à la sortie du transducteur est disposée une unité de traitement numérique, qui délivre sous forme numérique une valeur représentative de la position de l'élément sensible par rapport au transducteur, et qui à partir de deux mesures, faites l'une en l'absence de feuille, l'autre en présence de feuille, procède par soustraction et délivre sous forme numérique une valeur de l'épaisseur de feuille, ladite valeur de l'épaisseur de feuille étant insensible au gain.

Selon d'autres caractéristiques de l'invention :

-    le transducteur comporte un enroulement d'entrée et deux enroulements de sortie, l'unité de traitement numérique comporte un microprocesseur et deux convertisseurs analogique-numérique montés respectivement entre chacun des enroulements de sortie et le microprocesseur ;

-    le transducteur a deux enroulements d'entrée et un enroulement de sortie, l'alimentation de l'un des enroulements d'entrée étant assurée directement et l'alimentation de l'autre enroulement d'entrée étant assurée par l'intermédiaire d'un convertisseur numérique-analogique de multiplication, de façon à annuler le signal de sortie de l'enroulement de sortie ;

-    le coefficient multiplicateur du convertisseur numérique-analogique de multiplication est compris entre 0 et 1, et il est réglé par un compteur commandé par une unité de contrôle recevant le signal de sortie de l'enroulement de sortie, le total affiché par le compteur étant augmenté lorsque le signal de sortie est positif, diminué lorsqu'il est négatif, et arrêté lorsqu'il est nul ;

-    les deux enroulements d'entrée sont alimentés par l'intermédiaire d'un multiplexeur de façon à inverser leurs alimentations afin d'obtenir un signal de sortie nul ;

-    les deux enroulements d'entrée et l'enroulement de sortie sont réalisés sous forme de circuits imprimés à profil en signal carré ledit enroulement de sortie constituant l'élément sensible du transducteur ;

-    par rapport au circuit imprimé de l'enroulement de sortie, les deux circuits imprimés des enroulements d'entrée sont géométriquement décalés de façon à créer un champ magnétique spatial en sinus avec l'un et en cosinus avec l'autre ;

-    les deux circuits imprimés des enroulements d'entrée créent un champ magnétique dont l'amplitude est proportionnelle à leur courant d'excitation ;

-    les seuils d'épaisseur de feuilles sont automatiquement déterminés par la mesure de l'épaisseur des premières feuilles d'une nouvelle cassette.

D'autres caractéristiques de l'invention ressortent de la description qui suit faite avec référence aux dessins annexés dans lesquels :

La figure 1 représente le schéma de principe du dispositif de mesure d'épaisseur selon l'invention ;

La figure 2 représente un premier exemple de réalisation du dispositif de mesure selon l'invention ;

La figure 3 est un tableau représentatif de mesures effectuées avec des gains différents ;

La figure 4 représente un deuxième exemple de réalisation du dispositif de mesure selon l'invention ;

La figure 5 représente un schéma simplifié d'un troisième exemple de réalisation de l'invention.

La présente invention permet la mesure numérique de l'épaisseur de feuilles ou billets avec une grande résolution, par exemple un centième de l'épaisseur d'un billet. La mesure numérique, par opposition à la mesure analogique, permet de représenter l'épaisseur d'une feuille par un nombre au lieu d'un niveau de tension.

Sous forme de nombre, une épaisseur de feuille peut facilement être traitée par les techniques numériques d'ordinateur. Les nombres peuvent être stockés, moyennés, divisés, multipliés, par exemple.

Tout nombre de feuilles de différentes épaisseurs peut être mesuré à tout moment sans ajustement manuel.

Ni les variations dans la référence en l'absence de feuille, ni de grandes variations dans le gain du système n'affectent la précision de la mesure d'épaisseur.

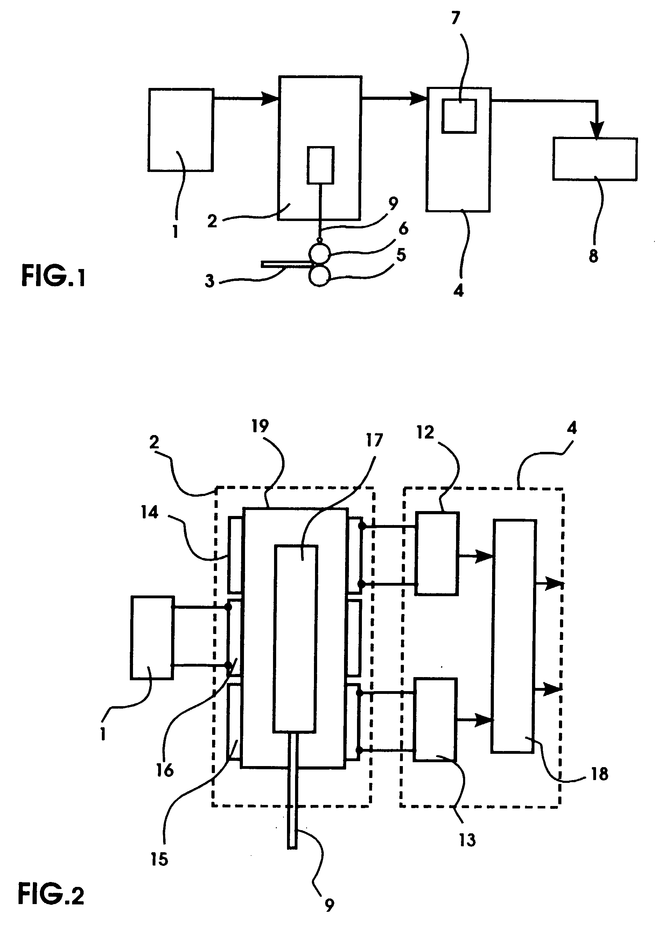

Sur la figure 1, une feuille 3 est amenée à des rouleaux 5 et 6. Le rouleau 5 est fixe de sorte qu'il ne peut être déplacé verticalement. Le rouleau palpeur 6 peut se déplacer verticalement et il est sollicité, par exemple par un ressort, vers le rouleau 5. Il se déplace en fonction de l'épaisseur de la feuille 3 lorsque celle-ci est entre les rouleaux 5 et 6. Le rouleau 6 déplace l'axe 9 du transducteur 2.

Le transducteur 2 est alimenté par un oscillateur 1, et sa sortie est appliquée à l'unité de traitement numérique 4 du transducteur, qui consiste en des convertisseurs analogique-numérique, et un microprocesseur numérique.

Cette unité 4 transforme les valeurs du transducteur en nombre 7 d'épaisseur de feuille, en toute unité désirée, par exemple en micromètres. La plupart des billets de banque, dans le monde, ont une épaisseur comprise entre 50 et 150 micromètres.

Le nombre représentant l'épaisseur d'un billet est envoyé au calculateur 8 du système de délivrance des billets. Ce calculateur contrôle toutes les fonctions du système de délivrance des billets : départ et arrêt des moteurs d'alimentation, actionnement des mécanismes de rejet des billets, contrôle du circuit correct des billets à l'intérieur de la machine à délivrer les billets, par exemple.

Lorsque plusieurs billets sont détectés, ils peuvent être rejetés ou délivrés et considérés comme une partie du paiement en billets.

En raison de ses capacités de calcul numérique et de stockage, le calculateur du système peut calculer et stocker des valeurs moyennes d'épaisseur de feuilles.

Ces valeurs peuvent être utilisées pour corriger automatiquement les valeurs de seuil pour la détection de plusieurs feuilles.

De nombreux systèmes de distribution de feuilles comportant des cassettes à partir desquelles les feuilles sont retirées. Lorsque les cassettes sont renouvelées, les premières feuilles à distribuer peuvent être mesurées. La moyenne de ces mesures peut être utilisée pour déterminer les valeurs de seuil de l'épaisseur de feuille.

Ce procédé de détermination automatique des valeurs de seuil est particulièrement utile pour les systèmes qui distribuent des feuilles d'épaisseurs différentes à partir de cassettes différentes, étant donné qu'il permet l'insertion d'une cassette dans toute fente pour cassette quelle que soit l'épaisseur des feuilles dans la cassette.

Pour pouvoir assurer de telles opérations, une mesure numérique de l'épaisseur de feuille à haute résolution est exigée, et pas seulement un simple franchissement de seuil par un signal analogique comme c'est le cas dans les documents précités.

La figure 2 montre les détails du transducteur 2 et de l'unité 4 de traitement numérique du transducteur dans un premier mode de réalisation.

Le transducteur 2 est composé de trois enroulements sur un cylindre creux 19. L'enroulement 16 est bobiné autour du cylindre et positionné linéairement au centre de son axe longitudinal. Les enroulements 14 et 15 sont bobinés de chaque côté de l'enroulement 16 de sorte que leurs centres respectifs soient symétriques par rapport au centre de l'enroulement 16 sur l'axe longitudinal du cylindre 19. Le noyau de couplage 17 se déplace axialement à l'intérieur du cylindre creux 19, sa longueur est approximativement égale à la distance entre les centres des enroulements 14 et 15. Ce noyau de couplage 17 assure le couplage inductif des enroulements 14 et 16 aussi bien que des enroulements 15 et 16.

Lorsque l'enroulement 16 est relié à l'oscillateur 1, le courant passant dans l'enroulement 16 produit un champ magnétique qui est couplé aux enroulements 14 et 15 en fonction de la position du noyau de couplage 17. Ce couplage, à son tour, produit une tension aux bornes des enroulements 14 et 15 qui est en relation avec la position du noyau. Cette position est exprimée par l'équation suivante :

$$P17 = \frac{V14 - V15}{V14 + V15} \cdot K$$

ou

$$P17 = K. (1- V15/V14) / (1 + V15/V14) \qquad (1)$$

dans laquelle : P17 est la position du centre du noyau par rapport au centre de l'enroulement 16 (milieu de la distance des centres des enroulements 14 et 15)

V14 est la tension aux bornes de l'enroulement 14

V15 est la tension aux bornes de l'enroulement 15

K est une constante pour convertir les rapport de tensions en nombre représentatif de l'épaisseur de feuille.

P17 en l'absence de feuille est stockée dans le microprocesseur 18. Lorsqu'une feuille apparait entre les rouleaux 5 et 6, P17 est calculée et soustraite numériquement de la valeur stockée P17 en l'absence de feuille. Le résultat de cette soustraction numérique est l'épaisseur de feuille.

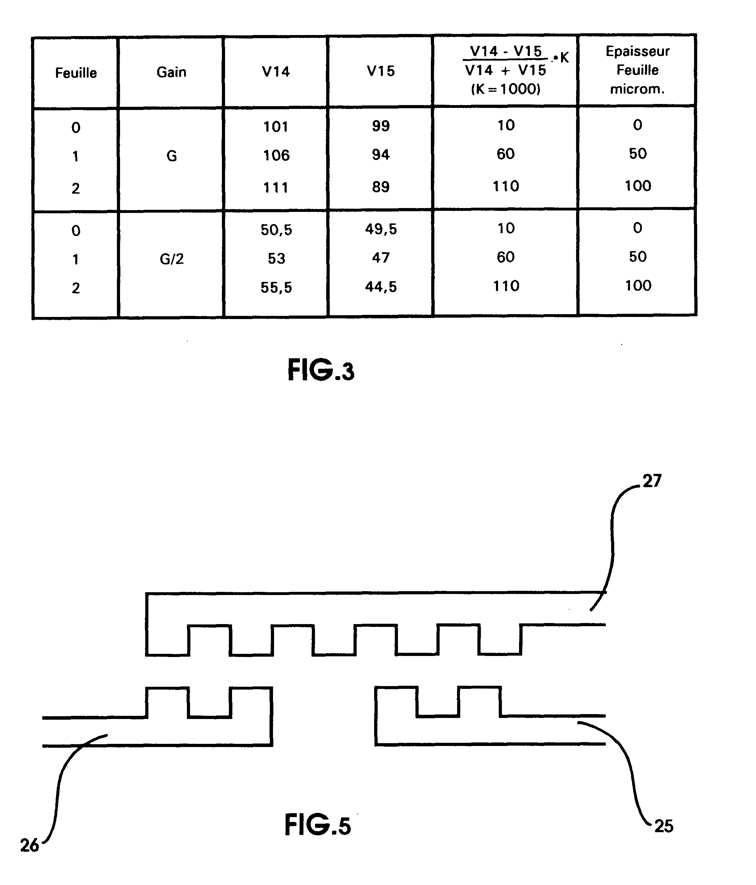

L'épaisseur de feuille est indépendante des variations du gain. Des variations de gain peuvent survenir en raison de variations dans un oscillateur ou dans un amplificateur, et elles entraînent des variations de la tension de sortie pour le même déplacement du noyau du transducteur. Selon la présente invention, l'indépendance par rapport au gain est illustrée sur la figure 3 qui montre des valeurs en l'absence de feuille, avec une feuille et avec deux feuilles, calculées à partir de l'équation (1), pour deux conditions de gain, l'un des gains étant le double de l'autre. Il ressort de ce tableau que la valeur de l'épaisseur de feuille n'est pas modifiée quel que soit le gain.

Sur la figure 2, les convertisseurs A/D (analogique-numérique) 12 et 13 convertissent les tensions analogiques des enroulements 14 et 15 respectivement en nombres numériques. Ces convertisseurs peuvent aussi être incorporés au microprocesseur 18. Ils doivent être choisis pour correspondre à l'application. Si, par exemple, une course de 1 millimètre et une résolution de 1 micromètre sont demandées, alors un convertisseur A/D à 10 bits (diviser par 1024) est nécessaire.

Selon un autre mode de réalisation de l'invention, la position du noyau de couplage 17 est obtenue par une méthode différente utilisant le même transducteur. Dans la première méthode de la figure 2, l'enroulement 16 est excité par l'oscillateur 1 et il produit des tensions dans les enroulements 14 et 15, les valeurs de ces tensions étant fonction de la position du noyau de couplage. Ces tensions sont converties en nombres par les convertisseurs A/D 12 et 13.

Les nombres résultant de cette conversion sont alors utilisés pour calculer la position du noyau.

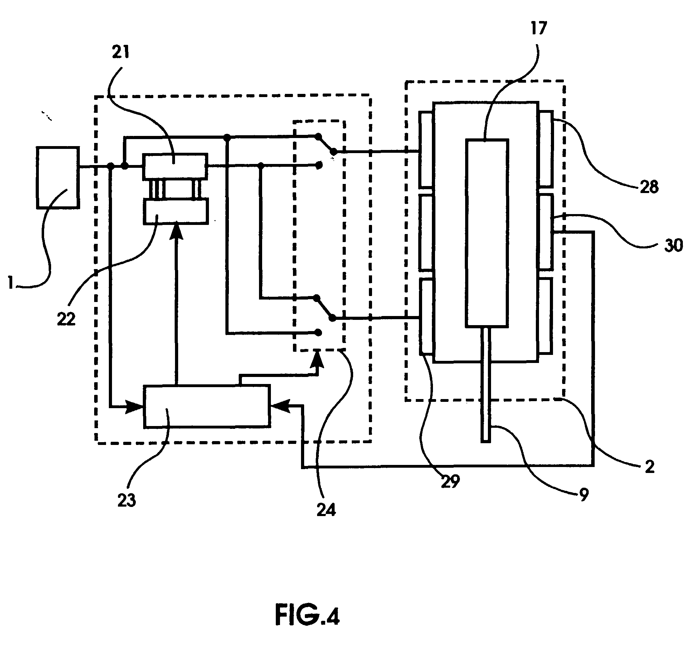

Dans la variante de réalisation de la figure 4, l'oscillateur 1 est relié à l'un des enroulements 28 ou 29 du transducteur 2 par l'intermédiaire d'un multiplexeur 24 placé sous le contrôle de l'unité de contrôle 23 qui reçoit elle-même le signal de sortie de l'oscillateur 1. L'oscillateur 1 est également relié à un convertisseur D/A (numérique-analogique) de multiplication (M DAC), 21, dont la sortie est reliée à l'autre enroulement 29, 28 du transducteur par l'intermédiaire du multiplexeur 24. L'enroulement 30 est relié par sa sortie à l'unité de contrôle 23 qui commande d'une part le multiplexeur 24, d'autre part un compteur 22 dont le nombre de sortie est appliqué au M DAC 21.

L'un des enroulements 28, 29 est excité directement par l'oscillateur 1, tandis que l'autre est excité par la sortie du M DAC 21. Cette sortie correspond au signal de l'oscillateur 1 multiplié par la valeur numérique appliquée par le compteur 22. Cette valeur numérique est comprise entre les limites de 0 et 1.

Pour chaque position du noyau (dans la caractéristique linéaire du transducteur 2) il y a un rapport des courants dans les deux enroulements 28 et 29 du transducteur qui fournit une valeur zéro en sortie de l'enroulement 30. La sortie de l'enroulement 30 est reliée à l'unité de contrôle 23 qui en effectue une démodulation synchrone. L'unité de contrôle 23 commande le compteur 22 de sorte qu'il compte lorsque le signal en provenance de l'enroulement 30 est positif, qu'il décompte lorsque le signal est négatif, et qu'il s'arrête lorsque le signal est nul.

La position du noyau 17 est déterminée par l'équation suivante lorsque le compteur est arrêté :

$$P17 = K (1 - CR)/(1 + CR) \qquad (2)$$

dans laquelle :

P17 est la position du noyau 17 par rapport au centre de l'enroulement 30,

CR est le nombre lu sur le compteur 22 lorsque l'unité de contrôle 23 commande l'arrêt du compteur, c'est-à-dire lorsque le centre du noyau 17 est dans la position dans laquelle le champ magnétique créé par le courant circulant dans les enroulements 28 et 29 est nul au centre de l'enroulement 30.

K est une constante de multiplication.

Pour obtenir l'épaisseur de feuille, la position P17 en l'absence de feuille est retranchée de la position P17 en présence d'une feuille, ou de plusieurs feuilles.

Il faut remarquer que la méthode ci-dessus décrite fait varier les courants d'excitation dans les enroulements 28 et 29 de sorte que le champ magnétique qui en résulte au centre de l'enroulement 30 est nul. Ceci est un avantage par rapport à l'utilisation classique de ce type de transducteur dans lequel le zéro du champ magnétique est fixe par rapport à la position des enroulements et où le champ magnétique est mesuré dans une position déterminée, ce qui rend la mesure sensible au gain. Lorsque le champ magnétique est asservi jusqu'à zéro, comme dans ce mode de réalisation de l'invention, les variations du gain sont très atténuées étant donné qu'une variation du gain affecte les deux enroulements proportionnellement et en conséquence ne va pas changer la position du zéro du champ magnétique.

Cette position est déterminée par le rapport des courants d'excitation, et non par leur amplitude.

Lorsque le noyau 17 est dans une position qui couple plus l'enroulement 29 que l'enroulement 28 avec l'enroulement 30, alors davantage de courant est nécessaire dans l'enroulement 28 que dans l'enroulement 29 afin de créer un champ magnétique qui soit zéro au centre de l'enroulement 30.

Avec le commutateur de multiplexage 24, dans la position représentée figure 4, il est possible d'atteindre la configuration désirée car le signal de sortie de l'oscillateur 1 est, par définition, toujours plus grand que celui du M DAC 21.

Cependant, lorsque le noyau 17 est dans une position qui couple davantage l'enroulement 28 que l'enroulement 29 à l'enroulement 30, alors pour obtenir une condition de champ magnétique nul au centre de l'enroulement 30 il faut un courant plus grand dans l'enroulement 29 que dans l'enroulement 28. Cela n'est pas possible dans la disposition de la figure 4. Pour permettre une condition de champ magnétique nul pour toute position du noyau 17, l'unité de contrôle 23 analyse le signal en provenance de l'enroulement 30 et actionne le commutateur de multiplexage 24, permettant ainsi à l'enroulement 29 d'avoir un courant plus grand que l'enroulement 28.

Selon le troisième mode de réalisation de l'invention (figure 5), les enroulements 14, 15, 16 ou 28, 29, 30 sont remplacés par des circuits imprimés à profil en forme de signal carré. Les deux circuits 25 et 26 sont fixes.

Le circuit 27 est mobile avec le rouleau palpeur 6, il tient lieu à la fois de l'enroulement central et du noyau mobile de la figure 4 ; il constitue l'élément sensible à la position du rouleau palpeur.

Les trois circuits imprimés 25, 26, 27 ont la même longueur de cycle. Les circuits 25 et 26 sont décalés l'un de l'autre d'un quart de cycle par rapport au circuit 27. Lorsque l'enroulement 25 est excité par un courant électrique d'amplitude A, il produit dans l'espace un champ magnétique de formule A sin θ. De la même manière, lorsque l'enroulement 26 est excité par un courant d'amplitude B, il produit dans l'espace un champ magnétique de formule B cos θ.

Dans ces formules :

A est l'amplitude du courant dans l'enroulement 25,

B est l'amplitude du courant dans l'enroulement 26,

θ est la position angulaire dans un cycle d'espace de 360°.

La condition pour que le champ magnétique soit nul en un point quelconque dans un cycle d'espace est :

$$A \sin \theta - B \cos \theta = 0$$

ou

$$B/A = +\sin \theta / \cos \theta = +\text{tg } \theta$$

Pour mesurer la position relative des rouleaux 5 et 6, la méthode décrite en relation avec la figure 4 est utilisée : l'unité de contrôle 23 commande le compteur 22 qui à son tour commande le M DAC 21 qui fait varier le courant dans un enroulement jusqu'à ce que la sortie de l'enroulement 27 soit zéro. La lecture du compteur est alors égale à tgθ.

La position θ dans un cycle est calculée par l'unité de contrôle 23.

L'appareil selon l'invention procède à la mesure de l'épaisseur d'une feuille ou d'un billet par différence de valeurs numériques. En l'absence de feuille, l'appareil fait une mesure par recherche d'un signal zéro au transducteur, et il mémorise le nombre correspondant N1.

Ensuite, en présence d'une feuille, il procède de la même manière et mémorise un deuxième nombre N2. Le nombre correspondant à l'épaisseur de la feuille est la différence (N2-N1) ; il est aussi mémorisé pour comparaison au cas où il y aurait plusieurs feuilles superposées. Ces nombres sont mémorisés dans la mémoire d'épaisseur de feuille 7 (figure 1) de l'unité de traitement numérique du transducteur 4. Le calculateur du système de délivrance de feuilles 9 reçoit les nombres correspondant à l'épaisseur des feuilles pour le comptage des billets délivrés par exemple.

Selon l'invention, les nombres élaborés et mémorisés se présentent de préférence sous forme binaire, mais ils pourraient aussi bien se présenter sous forme décimale ou dans une autre base.

## Revendications

**1.** Dispositif de mesure numérique de l'épaisseur de feuilles qui passent entre un rouleau fixe (5) et un rouleau palpeur (6) sollicité vers le rouleau fixe (5), comportant un transducteur (2) présentant au moins un enroulement d'entrée, au moins un enroulement de sortie, et un élément (17) sensible à la position du rouleau palpeur (6), l'alimentation d'entrée du transducteur étant assurée par un oscillateur (1), caractérisé en ce que le transducteur comporte un troisième enroulement (15 ; 29), de façon à utiliser, pour le calcul de l'épaisseur de la feuille, soit le rapport de deux tensions de sortie lorsque le troisième enroulement est un enroulement de sortie (15), soit le rapport de deux courants d'entrée lorsque le troisième enroulement est un enroulement d'entrée (29), et en ce que, à la sortie du transducteur (2) est disposée une unité de traitement numérique (4), qui délivre sous forme numérique une valeur représentative de la position de l'élément sensible (17) par rapport au transducteur (2), et qui à partir de deux mesures, faites l'une en l'absence de feuille, l'autre en présence de feuille, procède par soustraction et délivre sous forme numérique une valeur de l'épaisseur de feuille, ladite valeur de l'épaisseur de feuille étant insensible au gain.

**2.** Dispositif selon la revendication 1, caractérisé en ce que le transducteur (2) comporte un enroulement d'entrée (16) et deux enroulements de sortie (14, 15), l'unité de traitement numérique (4) comporte un microprocesseur (18) et deux convertisseurs analogique-numérique (12, 13) montés respectivement entre chacun des enroulements de sortie (14, 15) et le microprocesseur (18).

**3.** Dispositif selon la revendication 1, caractérisé en ce que le transducteur (2) a deux enroulements d'entrée (28, 29) et un enroulement de sortie (30), l'alimentation de l'un des enroulements d'entrée étant assurée directement et l'alimentation de l'autre enroulement d'entrée étant assurée par l'intermédiaire d'un convertisseur numérique-analogique de multiplication (21), de façon à annuler le signal de sortie de l'enroulement de sortie (30).

**4.** Dispositif selon la revendication 3, caractérisé en ce que le coefficient multiplicateur du convertisseur numérique-analogique de multiplication (21) est compris entre 0 et 1, et il est réglé par un compteur (22) commandé par une unité de contrôle (23) recevant le signal de sortie de l'enroulement de sortie (30), le total affiché par le compteur (22) étant augmenté lorsque le signal de sortie est positif, diminué lorsqu'il est négatif, et arrêté lorsqu'il est nul.

5. Dispositif selon la revendication 3, caractérisé en ce que les deux enroulements d'entrée (28, 29) sont alimentés par l'intermédiaire d'un multiplexeur de façon à inverser leurs alimentations afin d'obtenir un signal de sortie nul.

6. Dispositif selon la revendication 1, caractérisé en ce que les deux enroulements d'entrée (25, 26) et l'enroulement de sortie (27) sont réalisés sous forme de circuits imprimés à profil en signal carré, ledit enroulement de sortie constituant l'élément sensible du transducteur (2).

7. Dispositif selon la revendication 6, caractérisé en ce que par rapport au circuit imprimé de l'enroulement de sortie (27), les deux circuits imprimés des enroulements d'entrée (25, 26) sont géométriquement décalés de façon à créer un champ magnétique spatial en sinus avec l'un et en cosinus avec l'autre.

8. Dispositif selon la revendication 7, caractérisé en ce que les deux circuits imprimés des enroulements d'entrée créent un champ magnétique dont l'amplitude est proportionnelle à leur courant d'excitation.

9. Dispositif selon l'une des revendications 1 à 8, caractérisé en ce que les seuils d'épaisseur de feuilles sont automatiquement déterminés par la mesure de l'épaisseur des premières feuilles d'une nouvelle cassette.

## Claims

1. A numerical measuring device for measuring the thickness of sheets which pass between a fixed roller (5) and a follower roller (6) which is urged towards the fixed roller (5), comprising a transducer (2) having at least one input winding, at least one output winding, and an element (17) sensitive to the position of the follower roller (6), the input supply to the transducer being provided by an oscillator (1), characterised in that the transducer comprises a third winding (15; 29) so as to utilise, for calculating the thickness of the sheet, either the ratio of two output voltages when the third winding is an output winding (15), or the ratio of two input currents when the third winding is an input winding (29), and in that, at the output from the transducer (2) there is arranged a numerical processing unit (4) which delivers in numerical form a value representing the position of the sensitive element (17) relative to the transducer (2), and which, starting from two measurements, one made with the sheet being absent, and the other with the sheet being present, proceeds by subtraction and delivers in numerical form a value of the sheet thickness, said value of the sheet thickness being insensitive to the gain.

2. A device according to Claim 1, characterised in that the transducer (2) comprises an input winding (16) and two output windings (14, 15), the numerical processing unit (4) comprises a microprocessor (18) and two analog-digital converters (12, 13) mounted respectively between each of the output windings (14, 15) and the microprocessor (18).

3. A device according to Claim 1, characterised in that the transducer (2) has two input windings (28, 29) and an output winding (30), the supply to one of these input windings being provided directly and the supply to the other input winding being provided by means of a multiplying digital-analog converter (21), so as to cancel out the output signal of the output winding (30).

4. A device according to Claim 3, characterised in that the multiplying coefficient of the multiplying digital-analog converter (21) is between 0 and 1, and it is regulated by a counter (22) controlled by a control unit (23) receiving the output signal of the output winding (30), the total displayed by the counter (22) being increased when the output signal is positive, reduced when it is negative, and stopped when it is zero.

5. A device according to Claim 3, characterised in that the two input windings (28, 29) are supplied by means of a multiplexer so as to reverse their supplies in order to obtain a zero output signal.

6. A device according to Claim 1, characterised in that the two input windings (25, 26) and the output winding (27) are made in the form of printed circuits with a square wave profile, said output winding forming the sensitive element of the transducer (2).

7. A device according to Claim 6, characterised in that relative to the printed circuit of the output winding (27), the two printed circuits of the input windings (25, 26) are geometrically offset so as to create a spatial magnetic field in sine form with one and one in cosine form with the other.

8. A device according to Claim 7, characterised in that the two printed circuits of the input windings create a magnetic field, the amplitude of which is proportional to the excitation current thereof.

**9.** A device according to one of Claims 1 to 8, characterised in that the sheet thickness thresholds are automatically determined by measuring the thickness of the first sheets of a new cassette.

## Patentansprüche

**1.** Vorrichtung zur numerischen Messung der Dicke von Blättern, die zwischen einer festen Walze (5) und einer gegen die feste Walze (5) getriebenen Fühlerwalze (6) hindurch laufen, mit einem Wandler (2), der zumindest eine Eingangswicklung, zumindest eine Ausgangswicklung und ein Element (17) aufweist, welches für die Position der Fühlerwalze (6) empfindlich ist, wobei der Eingang des Wandlers von einem Oszillator (1) gespeist ist,
*dadurch gekennzeichnet, dass*
der Wandler eine dritte Wicklung (15; 29) aufweist, um zur Berechnung der Dicke des Blattes entweder das Verhältnis zweier Ausgangsspannungen, wenn die dritte Wicklung eine Ausgangswicklung (15) ist, oder das Verhältnis zweier Eingangsströme zu verwenden, wenn die dritte Wicklung eine Eingangswicklung (29) ist, und dass
an dem Ausgang des Wandlers (2) eine digitale Verabeitungseinheit (4) angeordnet ist, die einen mit Bezug auf den Wandler (2) die Position des empfindlichen Elements (17) wiedergebenden Wert in einer numerischen Form ausgibt, und die auf der Grundlage von zwei Messungen, wobei eine bei Abwesenheit des Blattes, die andere bei Anwesenheit des Blattes durchgeführt wird, eine Subtraktion vornimmt und einen Wert der Dicke des Blattes in numerischer Form abgibt, wobei der Wert der Dicke des Blattes verstärkungsunabhängig ist.

**2.** Vorrichtung gemäß Anspruch 1,
*dadurch gekennzeichnet, dass*
der Wandler (2) eine Eingangswicklung (16) und zwei Ausgangswicklungen (14, 15) aufweist, die digitale Verarbeitungseinheit (4) einen Mikroprozessor (18) und zwei Analog-Digital-Wandler (12, 13), die jeweils zwischen einer jeweiligen Ausgangswicklung (14, 15) und dem Mikroprozessor (18) angeordnet sind, aufweist.

**3.** Vorrichtung gemäß Anspruch 1,
*dadurch gekennzeichnet, dass*
der Wandler (2) zwei Eingangswicklungen (28, 29) und eine Ausgangswicklung (30) hat, wobei eine der Eingangswicklungen direkt gespeist und die andere Eingangswicklung über einen digital-analogen Multiplikationsumformer (21) gespeist ist, um das Ausgangssignal der Ausgangswicklung (30) aufzuheben.

**4.** Vorrichtung gemäß Anspruch 3,

*dadurch gekennzeichnet, dass*
der Multiplikationskoeffizient des digital-analogen Multiplikationsumformers (21) zwischen 0 und 1 liegt und von einem Zähler (22) geregelt wird, der von einer Steuerungseinheit (23) gesteuert ist, die das Ausgangssignal der Ausgangswicklung (30) empfängt, wobei der von dem Zähler (22) angezeigte Gesamtbetrag erhöht wird, wenn das Ausgangssignal positiv ist, verringert wird, wenn es negativ ist, und geich bleibt, wenn es Null ist.

**5.** Vorrichtung gemäß Anspruch 3,
*dadurch gekennzeichnet, dass*
die zwei Eingangswicklungen (28, 29) so über einen Multiplexer gespeist werden, um ihre Speisungen umzupolen, um ein Ausgangssignal von Null zu erhalten.

**6.** Vorrichtung gemäß Anspruch 1,
*dadurch gekennzeichnet, dass*
die zwei Eingangswicklungen (25, 26) und die Ausgangswicklung (27) als gedruckte Schaltungen mit rechteckförmigem Profil ausgeführt sind, wobei die Ausgangswicklung das empfindliche Element des Wandlers (2) bildet.

**7.** Vorrichtung gemäß Anspruch 6,
*dadurch gekennzeichnet, dass*
bezüglich der gedruckten Schaltung der Ausgangswicklung (27) die zwei gedruckten Schaltungen der Eingangswicklungen (25, 26) geometrisch versetzt sind, um ein sinusförmiges räumliches Magnetfeld mit der einen und ein cosinusförmiges Magnetfeld mit der anderen zu erzeugen.

**8.** Vorrichtung gemäß Anspruch 7,
*dadurch gekennzeichnet, dass*
die zwei gedruckten Schaltungen der Eingangswicklungen ein Magnetfeld erzeugen, dessen Amplitude proportional zu deren Anregungsstrom ist.

**9.** Vorrichtung gemäß einem der Ansprüche 1 bis 8,
*dadurch gekennzeichnet, dass*
die Grenzen der Dicke der Blätter automatisch durch die Messung der Dicke der ersten Blätter einer neuen Kassette ermittelt werden.

**FIG.1**

**FIG.2**

| Feuille | Gain | V14 | V15 | $\dfrac{V14 - V15}{V14 + V15} \cdot K$ (K = 1000) | Epaisseur Feuille microm. |
|---------|------|-----|-----|------|------|
| 0 | | 101 | 99 | 10 | 0 |
| 1 | G | 106 | 94 | 60 | 50 |
| 2 | | 111 | 89 | 110 | 100 |
| 0 | | 50,5 | 49,5 | 10 | 0 |
| 1 | G/2 | 53 | 47 | 60 | 50 |
| 2 | | 55,5 | 44,5 | 110 | 100 |

**FIG.3**

**FIG.5**

**FIG.4**